Europäisches Patentamt

European Patent Office

Office européen des brevets

(19)

(11) Veröffentlichungsnummer: **0 003 838**
**A1**

(12) # EUROPÄISCHE PATENTANMELDUNG

(21) Anmeldenummer: **79100522.6**

(22) Anmeldetag: **22.02.79**

(51) Int. Cl.²: **H 02 K 39/00**
**G 01 P 3/48**

(30) Priorität: **01.03.78 DE 7806069 U**

(43) Veröffentlichungstag der Anmeldung:
**05.09.79 Patentblatt 79/18**

(84) Benannte Vertragsstaaten:
**DE FR GB IT NL**

(71) Anmelder: **BERU-WERK Albert Ruprecht GmbH & Co KG**
**Wernerstrasse 35**
**D-7140 Ludwigsburg(DE)**

(72) Erfinder: **Blessing, Hans**
**Max-Planck-Strasse 19**
**D-7080 Aalen-Unterkochen(DE)**

(54) **Induktiver Impulsgeber.**

(57) Es wird ein induktiver Impulsgeber (10) vorgeschlagen, der in der Lage ist, durch Herabsetzen der Magnetfeld-Streuung hohe Spannungsimpulse zu liefern.

Der Impulsgeber besteht im wesentlichen aus einer Induktionsspule (18) mit Ferritkern (22) einer Anschlusseinheit (14) und einer Befestigungslasche (16). Gemäss der Erfindung weist die Befestigungslasche (16) einen Mittelsteg auf, in dessen unmittlebarer Nähe der Ferritkern (22) angeordnet ist.

Fig. 1

Croydon Printing Company Ltd.

EP 0 003 838 A1

BERU-WERK, Albert Ruprecht GmbH & Co KG, Ludwigsburg
-----------------------------------------------------

### Induktiver Impulsgeber

Die Neuerung betrifft einen induktiven Impulsgeber nach dem Oberbegriff des Hauptanspruchs.

Es sind bereits induktive Impulsgeber mit Befestigungslaschen bekannt, bei denen sich ein beidseitig offenes Magnetfeld des Ferritkerns in der Induktionsspule bildet. Dieses Magnetfeld weist eine große Streuung auf und es lassen sich damit nur Impulse kleiner Amplituden erzeugen.

Außerdem ist die Verankerung der Befestigungslasche an dem Impulsgeber aufwendig hergestellt, wodurch sich die Kosten der Herstellung vergrößern.

Es ist daher Aufgabe der Erfindung, einen induktiven Impulsgeber herzustellen, der Impulse mit hoher Amplitude liefert und dessen Befestigungslasche einfach und für die Herstellung billig am Impulsgeber angebracht ist.

Das wird neuerungsgemäß mit den kennzeichnenden Merkmalen des Hauptanspruchs erreicht. Weitere vorteilhafte Ausgestaltungen ergeben sich aus den Unteransprüchen.

Der Mittelsteg der magnetisch leitfähigen Befestigungslasche schließt den magnetischen Kreis zwischen Ferritkern und Rückschlußelement und verhindert in diesem Bereich ein magnetisches Streufeld. Das am anderen Ende zwischen Ferritkern und Rückschlußelement frei verlaufende magnetische Feld verstärkt sich so, und eine Feldänderung, hervorgerufen durch einen vorbeidrehenden Leitstift, bewirkt hohe Spannungsimpulse in der Induktionsspule.

Die Befestigungslasche sowie der Spulenträger und die Anschlußeinheit stellen eine feste Baueinheit dar.

Der Mittelsteg bildet in der Befestigungslasche hierfür Durchbrüche aus, durch die der Spulenträger mit der Anschlußeinheit verbunden ist. Der Mittelsteg bewirkt somit eine gute Verankerung der einzelnen Teile miteinander.

Weitere vorteilhafte Ausgestaltungen ergeben sich aus der Zeichnung und der nachfolgenden Beschreibung. Es zeigen:

Fig. 1 einen induktiven Impulsgeber im Schnitt mit Anschlußkabel,

Fig. 2 die Draufsicht dieses Impulsgebers ohne Anschlußkabel,

Fig. 3 die Befestigungslasche.

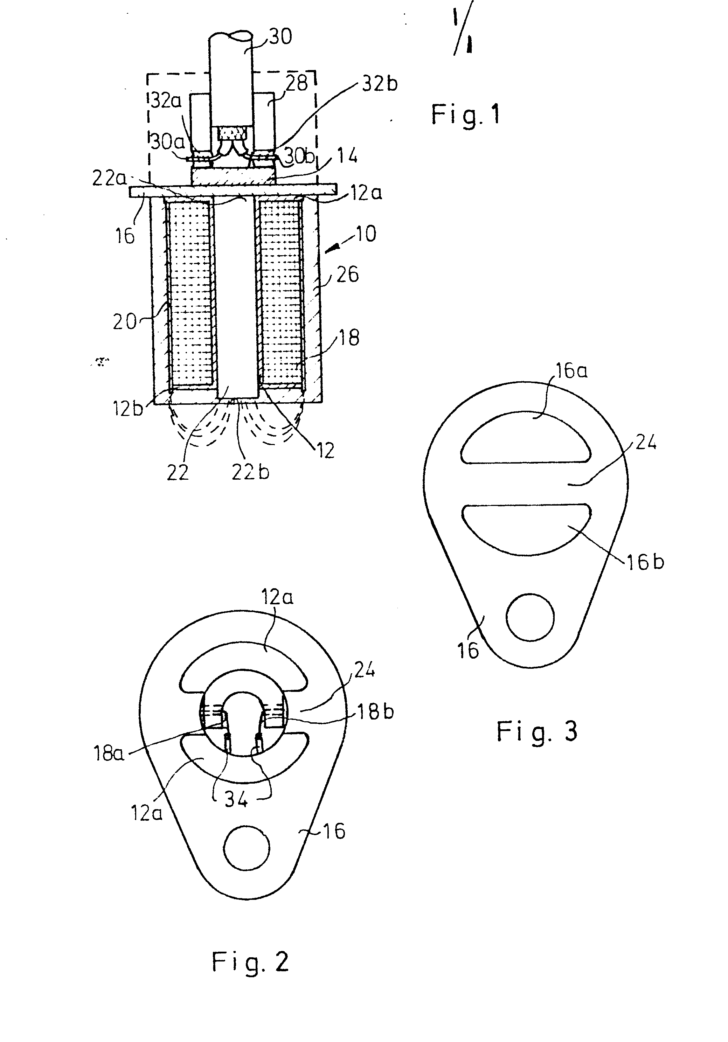

Ein induktiver Impulsgeber 10 besteht im wesentlichen aus einem Spulenträger 12, einer Anschlußeinheit 14 und einer magnetisch leitfähigen, vorzugsweise metallischen Befestigungslasche 16. Der Spulenkörper 12 weist eine Induktionsspule 18 auf, die ihrerseits von einem magnetischen Rückschlußelement 20 umgeben ist. In die konzentrische Bohrung des Spulenkörpers 12 ist ein Ferritkern 22 eingeschoben, der mit seiner Stirnfläche 22a an einen Mittelsteg 24 (siehe Fig. 3) der Befestigungslasche 16 stößt.

Der Spulenträger 12 mit seiner Induktionsspule 18 und das Rückschlußelement 20 sind mit einem Kunststoff 26 umhüllt. Es ist dabei vorteilhaft, wenn die Kunststoffumhüllung 26 die Stirnseite 22b des Ferritkerns 22 einige Zehntel Millimeter (0,1 - 0,9 mm) bedeckt. Dadurch ist der Ferritkern 22 sicher in der konzentrischen Bohrung gehalten, ohne daß das Magnetfeld zwischen Ferritkern 22 und Rückschlußelement 20 nennenswert geschwächt wird. Außerdem können sich auf Grund der glatten Oberfläche an dieser Stelle keine Verunreinigungen festsetzen, die die Stärke und Richtung des Magnetfeldes eventuell verändern würden.

Der Rand 12a des Spulenkörpers 12 ragt über das Rückschlußelement 20 hinaus und ermöglicht so eine feuchtigkeitsdichte
Verbindung mit der Umhüllung 26. Um das Magnetfeld im Arbeitsbereich nicht zu sehr streuen zu lassen, ist es zweckmäßig,
das Rückschlußelement 20 über den Rand 12b des Spulenträgers
12 hinaus zu verlängern.

Die Anschlußeinheit 14 besteht im wesentlichen aus einer
Halbschale 28, in die ein Anschlußkabel 30 gelegt ist. Die
Adern 30a, b des Anschlußkabels 30 liegen in Aussparungen
32a, b der Halbschale 28. Dort sind sie mit den Drahtenden
18a, b der Induktionsspule 18 verlötet, die durch Schlitze
34 in den Anschlußbereich treten.

Die Anschlußeinheit 14 und die darin eingelegte Leitung 30
sind von einem nicht gezeichneten Schrumpfschlauch zusammengehalten und mit Kunststoff umspritzt (Fig. 1 gestrichelt
gezeichnet).

Bei der Herstellung des induktiven Impulsgebers wird die
Befestigungslasche 16 in eine Spritzgießform eingelegt und
mit Kunststoff umspritzt. Es bilden sich der Spulenträger 12
und die Anschlußeinheit 14 aus, die über die vom Mittelsteg
24 gebildeten Durchbrüche 16a, b miteinander verbunden sind.

Der Induktionsgeber arbeitet folgendermaßen:                    —

Wird eine Spannung an die Induktionsspule 18 über die Anschlußleitung 30 angelegt, bildet sich ein Magnetfeld, dessen Feldlinien über Ferritkern 22, Mittelsteg 24 und Rückschlußelement
20 geschlossen sind. Zwischen Stirnfläche 22b und Rückschlußelement 20 liegen die Feldlinien im Freien und ein dort vorbeidrehender Leitstift, der z.B. an der Schwungscheibe eines
Motors angebracht ist, verändert das Magnetfeld, was einen
hohen Spannungsimpuls in der Induktionsspule hervorruft.
Dieser Spannungsimpuls wird über die Leitung 30 je nach Anforderung in einer nachgeschalteten Elektronik ausgewertet.

PAT/König/Ki
13.2.1979

Schutzansprüche
------------------

1. Induktiver Impulsgeber mit einer Befestigungslasche,
   mit einem im Bereich der Befestigungslasche mit einer
   Anschlußeinheit verbundenen Spulenkörper, der eine von
   einem Rückschlußelement umgebene Induktionsspule aufweist
   und in den konzentrisch ein Ferritkern eingebettet ist,
   dadurch gekennzeichnet, daß die Befestigungslasche einen
   Mittelsteg (24) besitzt und daß der Ferritkern (22) mit
   seiner einen Stirnfläche (22a) an den Mittelsteg (24)
   stößt oder sich zumindest in unmittelbarer Nähe des Mittelsteges (24) befindet.

2. Induktiver Impulsgeber nach Anspruch 1, dadurch gekennzeichnet, daß der Spulenträger (12) und die Anschlußeinheit (14) über Durchbrüche (16a; 16b) der Befestigungslasche (16) miteinander verbunden sind.

3. Induktiver Impulsgeber nach Anspruch 1 oder 2, dadurch
   gekennzeichnet, daß die Kunststoffumhüllung (26) die
   Stirnfläche (22b) des Ferritkerns (22) mit einer dünnen
   Schicht bedeckt.

4. Induktiver Impulsgeber nach einem oder mehreren der vorangegangenen Ansprüche, dadurch gekennzeichnet, daß der
   Rand (12a) des Spulenkörpers (12) über das Rückschlußelement (20) hinausragt.

5. Induktiver Impulsgeber nach einem oder mehreren der vorangegangenen Ansprüche, dadurch gekennzeichnet, daß das
   Rückschlußelement (20) über den Rand (12b) des Spulenkörpers (12) hinaus verlängert ist.

PAT/König/Ki
13.2.1979

0003838

1/1

Fig.1

Fig.2

Fig.3

**Europäisches Patentamt**

# EUROPÄISCHER RECHERCHENBERICHT

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | FR - A - 2 231 007 (FIAT)<br>* Seite 6, Zeilen 2-26; Figuren 8-10 * | 1-3 | H 02 K 39/00<br>G 01 P 3/48 |
| | -- | | |
| | FR - A - 2 252 573 (FERODO)<br>* Seite 4, Zeilen 9-19; Seite 6, Zeilen 18-23; Figuren 1-4 * | 1,3 | |
| | -- | | |
| | FR - A - 2 128 827 (TELDIX)<br>* Seite 11, Zeilen 5-32; Figur 4 * | 1,2,5 | **RECHERCHIERTE SACHGEBIETE (Int.Cl.²)** |
| | -- | | H 02 K 39/00<br>G 01 P 3/48<br>H 02 K 21/38 |
| | FR - A - 2 159 510 (ROBERT BOSCH)<br>* Seite 3, Zeilen 15-18; Seite 4, Zeilen 3-37; Figuren 1,3,4,5a, 5b,7a * | 1,2,5 | 21/44<br>35/06<br>H 01 F 5/02<br>G 01 D 5/20 |
| | -- | | |
| | FR - A - 1 402 570 (BENDIX)<br>* Seite 2, linke Spalte, Zeilen 49-61; Seite 2, rechte Spalte, Zeilen 1-11; Figur * | 1,2 | |
| | -- | | **KATEGORIE DER GENANNTEN DOKUMENTE** |
| | FR - A - 2 093 932 (BENDIX)<br>* Seite 4, Zeilen 29-31; Seite 5, Zeilen 23-40; Figuren 14,16 * | 3,5 | X: von besonderer Bedeutung<br>A: technologischer Hintergrund<br>O: nichtschriftliche Offenbarung<br>P: Zwischenliteratur<br>T: der Erfindung zugrunde |
| | -- | | liegende Theorien oder<br>Grundsätze |
| | US - A - 3 838 372 (DAMIJONAITIS)<br>* Spalte 3, Zeilen 29-34; Figur 1 * | 3 | E: kollidierende Anmeldung<br>D: in der Anmeldung angeführtes |
| | -- | | Dokument |
| | ./. | | L: aus andern Gründen<br>angeführtes Dokument<br>&: Mitglied der gleichen Patent- |

Der vorliegende Recherchenbericht wurde für alle Patentansprüche erstellt.

familie, übereinstimmendes Dokument

| Recherchenort | Abschlußdatum der Recherche | Prüfer |
|---|---|---|
| Den Haag | 07-05-1979 | TIO |

EPA form 1503.1 06.78

## EUROPÄISCHER RECHERCHENBERICHT

Europäisches
Patentamt

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| | DE - A - 1 488 869 (BAERMANN) <br> * Seite 6, Zeilen 8-24; Figur 1 * <br> -- <br> DE - C - 930 220 (SIEMENS-SCHUCKERT) <br> * Seite 1, Zeilen 30-32; Seite 2, Zeile 1; Figur 1 * <br> ---- | 4,5 <br><br> 4 | |
| | | | RECHERCHIERTE SACHGEBIETE (Int. Cl.³) |

EPA Form 1503.2 06.78